# EUROPEAN PATENT SPECIFICATION

(11) **EP 0 337 380 B1**
(45) Date of publication and mention of the grant of the patent: **08.09.1993**
(21) Application number: 89106383.6
(22) Date of filing: 11.04.1989
(51) Int. Cl.: G01L 9/06

(54) **Semiconductor pressure sensor**
Halbleiter-Druckwandler
Capteur de pression à semi-conducteurs

(30) Priority: 15.04.1988 US 181769
(43) Date of publication of application: 18.10.1989
(73) Proprietor: HONEYWELL INC., Minneapolis Minnesota 55408 (US)
(72) Inventor: Milton, W. Mathias, Colorado Springs Colorado 80909 (US); Douglas, W. Wilda, Ambler Pennsylvania 19002 (US)
(74) Representative: Rentzsch, Heinz, Dipl.-Ing.

(56) References cited:
- DE-A- 2 938 240
- US-A- 3 848 329
- US-A- 4 106 349

## Description

The present invention relates to absolute pressure transducers and specifically, is directed to a method for making an absolute pressure transducer and a transducer made thereby.

Pressure sensors or transducers using a plate or diaphragm of semiconductor material and having diffused strain-sensitive elements therein are well-known in the art, as shown in US-A 4,023,562 and 4,295,115. Further, absolute pressure transducers using a semiconductor plate or diaphragm exposed to an evacuated chamber are also well-known in the art as shown in the aforesaid patents and as additionally shown in US-A 4,287,501 and 4,703,658. However, as taught by the these prior art references, the known absolute pressure transducers involve manufacturing methods and structures which are inherently complicated and which add significantly to the manufacturing cost of the transducers. Accordingly, it is desirable to provide an absolute pressure transducer having a greatly simplified method of manufacture to produce a simple transducer structure and a significantly lowered manufacturing cost.

### SUMMARY OF THE INVENTION

An object of the present invention is to provide an improved method for manufacturing an absolute pressure transducer.

Another object of the present invention is to provide an improved absolute pressure transducer.

A further object of the present invention is to provide an improved pressure transmitter using the improved pressure transducer.

In accomplishing these and other objects, there has been provided, in accordance with the present invention, a method for making an absolute pressure transducer including the steps of mounting a strain responsive plate having strain-sensitive elements supported thereon across one end of an electrically insulating tube to form a first fluid-tight seal therewith, inserting a loose plug of a material similar to the material of the tube within the tube to define a chamber exposed to the plate, exposing the interior of the tube to a vacuum, concurrently heating the tube in the vicinity of the plug to allow the heated tube wall to fuse with the plug to form a second fluid-tight seal therewith and allowing the tube and plug to cool to trap the vacuum in the chamber. A pressure transmitter uses the transducer with electrical connections to the strain-sensitive elements in a fluid filled system for applying an external pressure to the plate to produce an output signal from the strain-sensitive elements representative of the differential pressure between the evacuated chamber and the external pressure.

### BRIEF DESCRIPTION OF THE DRAWING

A better understanding of the present invention may be had when the following detailed description is read in connection with the accompanying drawings in which:
Fig. 1 is a cross-sectional illustration of a completed absolute pressure transducer utilizing the method of the present invention,
Fig. 2 is a cross-sectional illustration of a support configuration for the transducer shown in Fig. 1,
Fig. 3 is a cross-sectional illustration of a pressure transducer using the transducer support and transducer shown in Fig. 2 and
Fig. 4 is a pictorial illustration of the apparatus used to make the transducer shown in Fig. 1.

### DESCRIPTION OF THE PREFERRED EMBODIMENT

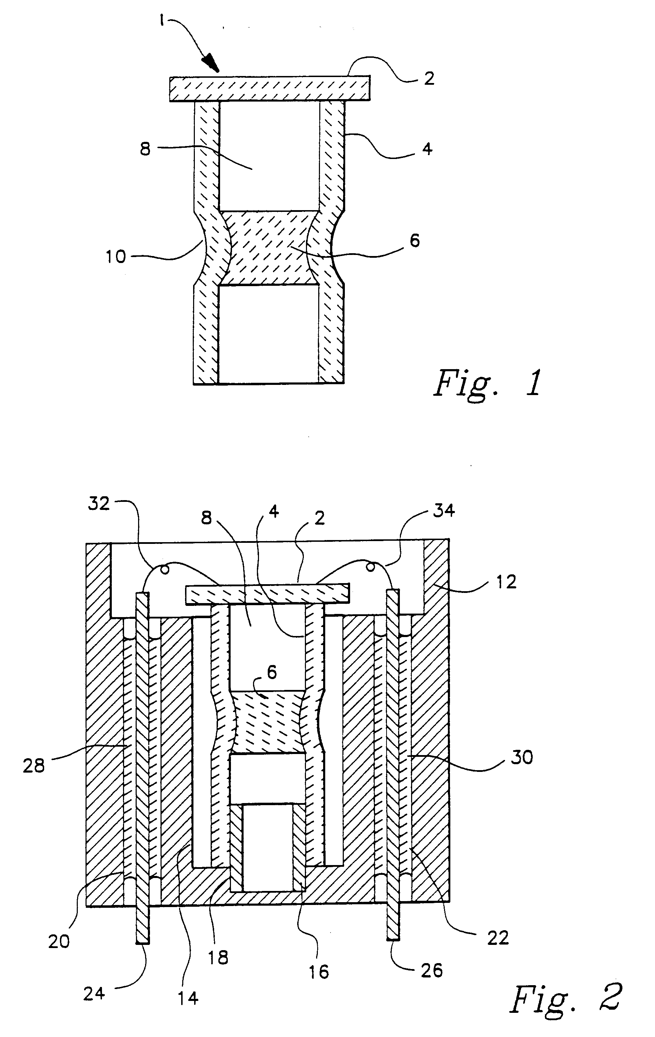

Referring to Fig. 1, there is shown an absolute pressure transducer 1 using a semiconductor plate or diaphragm 2 having strain-sensitive elements, e.g., piezoresistive diffused therein. The plate 2 is mounted across an open end of an electrically insulating tube 4, e.g., Pyrex, by conventional means. For example, the plate 2 may be attached by first metallizing the end of the tube 4, e.g., using a titanium-tungsten and gold layering process, and subsequently providing a thermal-electron bond of the plate 2 to the metallized surface. The plate 2 is wider than the outer diameter of the tube 4 and the aforesaid mounting provides a first fluid-tight seal across the tube 4. A plug 6 is located within the bore of the tube 4 to define a chamber 8 within the tube 4 adjacent to the plate 2. The tube 4 has a constricted wall 10 in the vicinity of the plug 6 as a result of the assembly of the transducer 1 as discussed hereinafter. The constricted portion 10 of the wall 4 is bonded or fused to the plug 6 to form a second fluid-tight seal therewith to define a chamber 8 exposed to the plate 2. The chamber 8 is arranged to be an evacuated chamber to provide a reference pressure for the plate 2. Accordingly, the transducer 1 shown in Fig. 1 provides a response which is occasioned by the pressure differential between the evacuated chamber 8 and a pressure applied externally to the other side of the plate or diaphragm 2.

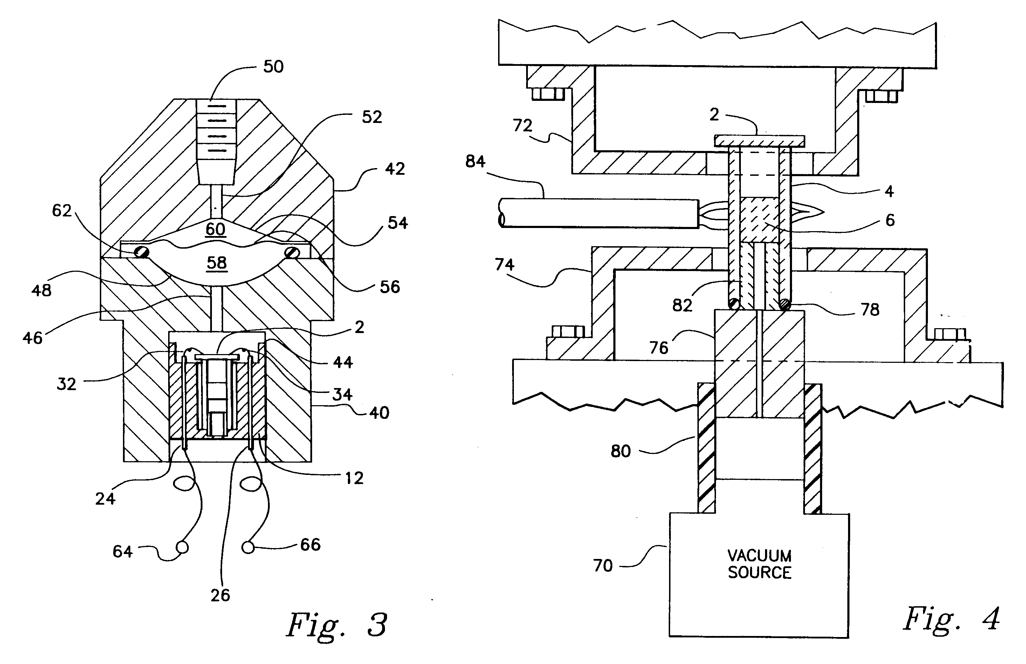

In Fig. 2, there is shown a mounting or header for supporting the transducer 1 shown in Fig. 1. Similar reference numbers have been used in Fig. 2 to indicate elements common to the illustration of Fig. 1. The header shown in Fig. 2 includes an outer metallic shell 12 having an inner axial chamber 14 for accommodating the transducer 1 shown in Fig. 1. An open end of the tube 4 opposite to the plate 2 is held within the chamber 14 by a rollpin 16 extending between the tube 4 and a counter bore 18 within the shell 12 at the bottom of the well 14. A pair of through holes 20 and 22 are provided through the shell 12 on respective sides of the well 14. A pair of metallic electrically conductive pins 24,26 are located in respective ones of the holes 20,22. The pins 24,26 are provided with a fluid-tight seal to the internal wall of the holes 20,22 by respective glass seals 28,30 extending therebetween. The pins 24,26 provide electrical connections through the shell 12. Electrical wires 32,34 are connected between the ends of the pins 24,26 adjacent to the plate 2 to provide electrical connections to the strain-sensitive elements diffused in the plate 2.

In Fig. 3, there is shown a pressure transmitter utilizing the header and transducer assembly shown in Fig. 2. Here again, similar reference numbers have been used to indicate structural elements common to Figs. 1 and 2. The pressure transmitter shown in Fig. 3 includes a pair of coaxial housings 40,42 which are attached together by any suitable means (not shown). A first one of the housings 40 includes a cavity 44 arranged to accommodate the header 12 therein. The outer peripheral surface of the header 12 is attached to the inner wall of the cavity 44 by any suitable means to provide a fluid-tight seal, e.g., epoxy bonding, welding, etc. The header 12 is arranged to expose the outer surface of the plate 2 to the remaining interior volume of the cavity 44. A fluid passage or duct 46 is provided within the housing 40 and extends from the bottom of the cavity 44 to the surface of a concave depression 48 located in a surface of a housing 40.

The second housing 42 is provided with a threaded hole 50 for accommodating a threaded connection to a fluid inlet pipe (not shown). An internal fluid passage 52 is provided between the threaded hole 50 and a concave surface on a surface of the second housing 42. The first and second concave surfaces 48,54 are arranged in a facing coaxial relationship and are separated by a flexible diaphragm 56. The diaphragm 56 and the first surface 48 define a first fluid volume 58, and the diaphragm 56 and the second surface 54 define a second fluid volume 60.

The flexible diaphragm 56 is provided with a fluid-tight seal between its outer peripheral edge and the housing 40,42 by any suitable means, e.g., O-ring 62. A first fill fluid is provided within the first housing 40 and provides a fluid path from one side of the diaphragm 56 through the first volume 58 and the fluid channel 46 to the cavity 44 and the outer surface of the plate 2. An external fluid for applying a pressure to be sensed to the transmitter shown in Fig. 3 is used to fill the fluid volume defined by the threaded bore 50, the fluid channel 52 and the second volume 60 to the other side of the barrier diaphragm 56. Thus, an external pressure applied via the external fluid is effective to act on the barrier diaphragm 56 to transmit a similar pressure through the fill fluid within the first housing 40 to the plate 2 to produce an output signal from the strain-sensitive elements diffused in the plate 2. An output signal from the plate 2 is derived via the wires 32,34, the pins 24,26 and external electrical connections 60,62 attached thereto.

In Fig. 4, there is shown a pictorial illustration of an apparatus for manufacturing the transducer shown in Fig. 1. In this apparatus, it may seen that the tube 4 with the assembled plate 2 is connected to a vacuum source 70, e.g., a vacuum pump, after the plug 6 has been loosely inserted within the tube 4. A pair of tube holders 72,74 are used to hold the tube 4 and to provide a heat sink to protect the integrity of the plate 2. The open end of the tube 4 is sealed to one end of a hollow plunger 76 by an O-ring 78. The other end of the plunger 76 is connected by a pipe 80 to the vacuum source 70. A hollow carbon rod 82 rests on the end of the plunger 76 adjacent to the O-ring 78 and extends into the tube 4 to provide a locating support for the glass plug 6. A gas jet 84 is used to heat the plug 6 and the tube 4 in the vicinity of the plug 6 to produce the constricted surface 10 of the tube 4 to trap the plug 6 and fuse the tube 4 therewith. After cooling, the tube assembly forming the transducer 1 is removed from the clamps 72,74 and utilized as described above.

## Claims

1. A method for making an absolute pressure transducer, **characterized by** the steps of
a) mounting a strain-sensitive plate (2) on one end of a hollow tube (4) to form a fluidtight seal therewith;
b) inserting a loose plug (6) within the bore of the tube to define a chamber (8) exposed to the plate;
c) exposing the interior of the tube (2) to a vacuum (70);
d) concurrently heating (84) the plug and the tube in the vicinity of the plug to allow the heated tube section (10) to fuse with the plug (6) to form a fluid-tight seal to trap the vacuum in the chamber (8).

2. The method according to claim 1, **characterized by** the further step of supporting (76,82) the plug (6) in the tube (4) at a predetermined location during the heating operation.

3. The method according to claim 1 or 2, **characterized by** the further step of allowing the fused tube (4) and plug (6) to cool to a working temperature of the transducer.

4. A pressure transducer, **characterized by**
a) a hollow tube (4),
b) a plate (2) supporting strain-sensitive elements and having a width larger than the outer diameter of said tube (4);
c) means for mounting said plate (2) across an end of said tube (4) to form a first fluid-tight seal therewith; and
d) a plug (6) within said tube (4) peripherally attached to an interior wall of said tube to form a second fluid-tight seal across a bore of said tube and defining a chamber (8) between said plug (6) and said plate (2).

5. The transducer according to claim 4, **characterized in that** said plate (2) is of a semiconductive material and said elements are piezoresistive elements diffused in said plate.

6. The transducer according to claim 4 or 5, **characterized in that** said plug (6) and said tube (4) are made of glass whereby said plug and said tube are fused to form said second fluid-tight seal.

7. The transducer according to claim 4, 5 or 6, **characterized in that** said chamber (8) contains a vacuum.

8. A pressure transmitter comprising a transducer (1) according to one of the claims 4 to 7, **characterized by** a fluid filled means (12,40) for applying a pressure to be measured to the other side of said plate (2) from said chamber (8).

9. The pressure transmitter according to claim 8, **characterized in that** said fluid filled means includes a fluid filled housing (40) containing said transducer (1) with said other side of said plate (2) exposed to the fluid in said housing, an inlet (50,52) to said housing and a barrier diaphragm (56) separating said inlet from the fluid in said housing.

## Patentansprüche

1. Verfahren zum Herstellen eines Absolutdruck-Umformers, **gekennzeichnet durch** folgende Schritte:
a) Befestigen einer dehnungsempfindlichen Platte an einem Ende eines hohlen Rohres (4) zwecks Bildung einer fluiddichten Abdichtung;
b) Einsetzen eines losen Stopfens (6) in die Öffnung des Rohres um eine an die Platte angrenzende Kammer (8) zu bilden;
c) Evakuieren des Innenraums des Rohres (4) mit Hilfe einer Vakuumquelle (70);
d) gleichzeitiges Aufheizen (84) des Stopfens sowie des Rohres im Bereich des Stopfens, um den erhitzten Rohrbereich (10) mit dem Stopfen (6) zu verschmelzen und eine fluiddichte Abdichtung zum Einschluß des Vakuums in der Kammer (8) zu bilden.

2. Verfahren nach Anspruch 1, **gekennzeichnet durch** den weiteren Schritt der Halterung (76, 82) des Stopfens (6) innerhalb des Rohres (4) an einer vorgegebenen Stelle während der Erhitzung.

3. Verfahren nach Anspruch 1 oder 2, **gekennzeichnet durch** den weiteren Schritt des Abkühlens des Verschmelzungsbereiches von Rohr (4) und Stopfen (6) auf eine Arbeitstemperatur des Umformers.

4. Druckumformer **gekennzeichnet durch:**
a) ein hohles Rohr (4);
b) eine Platte (2) als Träger für dehnungsempfindliche Elemente und mit einem großeren Durchmesser als der Außendurchmesser des Rohres (4);
c) Mittel zum Befestigen der Platte (2) an einem Ende des Rohres (4), um gegenüber diesem eine erste fluiddichte Abdichtung zu bilden; und
d) einen Stopfen (6) innerhalb des Rohres (4), der an seinem Umfang an der Innenwand des Rohres befestigt ist, um eine zweite fluiddichte Abdichtung über den Innenraum des Rohres und damit eine Kammer (8) zwischen dem Stopfen (6) und der Platte (2) zu bilden.

5. Umformer nach Anspruch 4, **dadurch gekennzeichnet,** daß die Platte (2) aus Halbleitermaterial besteht und die Elemente in diese Platte eindiffundierte piezoresistive Elemente sind.

6. Umformer nach Anspruch 4 oder 5, **dadurch gekennzeichnet,** daß der Stopfen (6) und das Rohr (4) aus Glas bestehen, wobei Stopfen und Rohr miteinander verschmolzen sind, um die zweite fluiddichte Abdichtung zu bilden.

7. Umformer nach Anspruch 4, 5 oder 6, **dadurch gekennzeichnet,** daß die Kammer (8) ein Vakuum enthält.

8. Drucktransmitter mit einem Druckumformer (1) nach einem der Ansprüche 4 bis 7, **gekennzeichnet durch** eine fluidgefüllte Einrichtung (12, 40) für die Zufuhr eines zu messenden Druckes auf die von der Kammer (8) abgewandte andere Seite der Platte (2).

9. Drucktransmitter nach Anspruch 8, **dadurch** **gekennzeichnet,** daß die fluidgefüllte Einrichtung ein fluidgefülltes Gehäuse (40) umfaßt, welches den Umformer (1) einschließt und wobei die andere Seite der Platte (2) dem Fluid in diesem Gehäuse ausgesetzt ist, sowie einen Einlaß (50, 52) in das Gehäuse und eine Trennmembran (56) aufweist, welche den Einlaß von dem Fluid im Gehäuse trennt.

## Revendications

1. Procédé de fabrication d'un transducteur de pression absolue,
**caractérisé** par les étapes consistant à :
a) monter sur une extrémité d'un tube creux (4) une plaque (2) sensible aux contraintes afin de former entre eux un joint étanche aux fluides;
b) insérer un bouchon lâche (6) à l'intérieur de l'alésage du tube afin de définir une chambre (8) exposée à la plaque;
c) exposer l'intérieur du tube (2) à un vide (70);
d) chauffer (84) simultanément le bouchon et le tube au voisinage du bouchon de façon à permettre à la section de tube chauffée (10) de fondre avec le bouchon (6) afin de former un joint étanche aux fluides pour piéger le vide dans la chambre (8).

2. Procédé selon la revendication 1,**caractérisé** par l'étape additionnelle consistant à supporter (76, 82) le bouchon (6) dans le tube (4) à un emplacement prédéterminé pendant l'opération de chauffage.

3. Procédé selon la revendication 1 ou 2, **caractérisé** par l'étape additionnelle consistant à permettre au tube fondu (4) et au bouchon (6) de refroidir à une température de travail du transducteur.

4. Transducteur de pression **caractérisé** par :
a) un tube creux (4);
b) une plaque (2) supportant des éléments sensibles aux contraintes et présentant une largeur supérieure au diamètre extérieur dudit tube (4);
c) un moyen de montage de ladite plaque (2) en travers d'une extrémité dudit tube (4) afin de former avec lui un premier joint étanche aux fluides; et
d) un bouchon (6) logé à l'intérieur dudit tube (4) attaché en périphérie à une paroi intérieure dudit tube afin de former un deuxième joint étanche aux fluides en travers d'un alésage dudit tube et définissant une chambre (8) entre ledit bouchon (6) et ladite plaque (2).

5. Transducteur selon la revendication 4, **caractérisé** en ce que ladite plaque (2) est en une matière semiconductrice et lesdits éléments sont des éléments piézorésistants diffusés dans ladite plaque.

6. Transducteur selon la revendication 4 ou 5, **caractérisé** en ce que ledit bouchon (6) et ledit tube (4) sont en verre, ledit bouchon et ledit tube étant fondus pour former ledit deuxième joint étanche aux fluides.

7. Transducteur selon la revendication 4, 5 ou 6, **caractérisé** en ce que ladite chambre (8) contient un vide.

8. Transmetteur de pression comprenant un transducteur (1) selon l'une des revendications 4 à 7, **caractérisé** par un moyen (12, 40) rempli de fluide pour appliquer à l'autre côté de ladite plaque (2), à partir de ladite chambre (8), une pression à mesurer.

9. Transmetteur de pression selon la revendication 8, **caractérisé** en ce que ledit moyen rempli de fluide comprend un boîtier (40) rempli de fluide contenant ledit transducteur (1), ledit autre côté de ladite plaque (2) étant exposé au fluide dudit boîtier, une entrée (50, 52) dudit boîtier et une membrane de barrière (56) séparant ladite entrée dudit fluide dans ledit boîtier.
